Europäisches Patentamt

(19) European Patent Office

Office européen des brevets

(11) Publication number: **0 101 264**
**A2**

(12) # EUROPEAN PATENT APPLICATION

(21) Application number: **83304526.3**

(22) Date of filing: **05.08.83**

(51) Int. Cl.³: **A 22 C 7/00**
**A 22 C 17/00**

(30) Priority: **14.08.82 GB 8223433**

(43) Date of publication of application:
**22.02.84 Bulletin 84/8**

(84) Designated Contracting States:
**AT BE CH DE FR GB IT LI LU NL SE**

(71) Applicant: **MORAN-DOUGLAS ENGINEERING LIMITED**
**Bro-Alun**
**Mold Clwyd North Wales(GB)**

(72) Inventor: **Moran, Arthur William**
**The Old Mill Bontuchel**
**Nr. Ruthin Clwyd North Wales(GB)**

(74) Representative: **Stringer, David Hiram et al,**
**GEOFFREY OWEN & COMPANY 76 Lower Bridge Street**
**Chester(GB)**

(54) **Improvements relating to the treatment of meat.**

(57) The present specification discloses a method and apparatus for treating meat, especially bacon pieces. Conventionally bacon pieces are individually frozen and then compressed, before slicing. This produces waste from the ends of the bacon pieces and also requires an amount of handling which reduces the temperature of the bacon pieces and thus impairs slicing unless the bacon piece is frozen to a great extent. However, such deep freezing impairs the quality of the bacon.

The present invention provides a method and apparatus wherein, if used to handle bacon, the bacon pieces are first compressed in a press (5) to attain a desired transverse cross-section. Then the compressed bacon pieces are passed through an elongate duct (1) which is refrigerated so that the bacon pieces are chilled or frozen to a limited extent before passing to the slicer (6). Thus handling is reduced and also by chilling and squaring off the ends of the bacon pieces, and freezing adjacent bacon pieces together, wastage during slicing is obviated.

_FIG 1_

Croydon Printing Company Ltd.

0101264

-1-

## DESCRIPTION

### "IMPROVEMENTS RELATING TO THE TREATMENT OF MEAT"

The present invention relates to a method and apparatus for use in treating and handling meat to enable a sliced product of good quality to be subsequently obtained.

Considering, by way of example, the present treatment of bacon and ham to produce a sliced product, the bacon or ham is first boned out and then with the ham, the ham is cooked, allowed to cool, and then sliced on a conventional slicer. With bacon, the bacon is deep frozen and then located in a press which forms the frozen bacon into a desired shape suitable for insertion in a simple cutter to produce bacon slices of the configuration required for subsequent vacuum packing. Alternatively it is known to place boned out bacon pieces in trays which are constructed with an interior having the desired shape to produce the required bacon slice configuration. These trays are then stacked one on top of the other in a freezer, the weight of upper trays pressing the bacon pieces to the interior configuration of the individual trays so that the frozen bacon pieces taken out of the trays are the required shape.

With the above processes, it will be appreciated that there is a relatively large amount of handling necessary and considering the bacon treatment, handling between freezing and introduction to the cutter assembly is undesirable as it quickly raises the temperature of the outer surface of the bacon pieces and can affect the subsequent slicing operation in a detrimental manner. To maintain at least a minimum outer skin temperature suitable for slicing, the bacon pieces have to be deep frozen. However, deep freezing is disadvantageous as it affects the quality of the bacon.

0101264

-2-

Preferably the bacon should be sliced when it is "green", to maintain quality. However, this is not practically feasible as the bacon is then too pliable.

The aim of the present invention is to provide a method and apparatus suitable for use in cooling meat and also suitable for use in slicing bacon for subsequent packaging, on a commercial basis, which method and apparatus does not require the bacon pieces to be deep frozen and also reduces the required amount of handling.

According to the present invention there is provided a method of treating meat comprising the steps of introducing boned-out pieces of meat into a press located at one end of an elongate duct, activating the press to deform the meat and moving the meat along the duct, the duct being maintained at a required temperature.

By virtue of the method of the present invention a ham, for example, may be introduced into the press, the duct being heated so that the ham is cooked as it passes therethrough. The cooked ham exiting from the duct then has the desired cross-sectional shape for slicing and in fact sliding may be effected as the cooked ham exits from the duct. The duct may be heated by steam, electrical heating elements or any other suitable means.

For bacon, the duct is cooled so that as the bacon pieces pass therealong they are chilled or frozen to an extent sufficient to facilitate slicing as the bacon exits from the duct, but to an extent not sufficient to noticeably reduce the quality of the bacon. By virtue of the present invention there need not of course, be any increase in surface temperature between pressing and slicing if the slicer is located immediately at the exit of the duct.

-3-

According to a further aspect of the present
invention there is provided an apparatus for use in
treating meat, the apparatus comprising an elongate
duct to one end of which a press is attached, the press
being adapted to compress a piece of meat to a cross-
section substantially similar to the internal transverse
cross-section of the duct, means being provided for
adjusting the temperature within the duct to a desired
level.

In a preferred embodiment of the present invention
for use in the treatment of bacon, the duct has a
generally rectangular internal cross-section and is
formed by a bottom endless conveyor which preferably
is provided with spikes for gripping the bacon and an
inverted U-shaped bridge formed by three roller
conveyors. The duct extends through a nitrogen tunnel
so that nitrogen gas can pass between the rollers of
the roller conveyor and freeze the surface of the bacon
pieces as they pass along the duct.

Whilst the rollers must be located close together at
the end region of the duct closest to the press, so that
the rollers hold the bacon piece in the compressed state,
the rollers further away from the press may be spaced
further apart from each other as the bacon piece is
then frozen in its compressed configuration. Alternatively of course, adjacent rollers may be equi-spaced
apart from each other throughout the length of the duct.

In a modified construction the inverted U-shaped
bridge is formed as a single member having two side
portions and an upper portion, each portion having a
planar surface to the inside of the duct, which surfaces
are angled convergently in the direction of travel
through the duct away from the press. Thus each bridge
provides a wide inlet end which narrows gradually to
the outlet of the bridge. These bridges are provided
in juxtaposition to each other to form the duct, nitrogen gas being able to pass between the bridges, even if the bridges are telescoped together to a certain extent. Thus, in the cold atmosphere of the nitrogen tunnel there are no moving parts to possibly provide a problem. Further, as there are no moving parts, no regular maintenance is required.

In an alternative embodiment of the present invention suitable for the treatment of bacon pieces, the duct is a solid tube having the desired internal cross-section, and a conventional refrigeration heat exchanger extends on the outside of the tube for the full length of the tube.

The press located at one end of the duct is preferably pneumatically operated. Alternatively however, the press may be hydraulically or mechanically operable. The press is basically in the form of a rectangular box, the upper side of which is pivotable to allow access to the press, the upper side being moved by means of a pneumatic ram. As desired, the press and duct may have any alternative internal configuration, the shape being solely dictated by the required shape for the bacon pieces. One end of the press box is formed by a piston connected to a pneumatic ram and the other end of the press box leads to the said duct and can be closed off by a plate which is slidable transversely to the longitudinal axis of the duct. Both the piston and the slidable plate are cooled, preferably by liquid nitrogen passing through bores provided in both the piston and plate.

In use, a bacon piece is inserted into the press and the upper side of the press is moved downwards to compress the bacon piece within the rectangular press box to the required transverse cross-section. The pneumatically operated piston is then activated to first push the compressed bacon piece against the slidable plate to square off the ends of the bacon piece.

The piston is subsequently retracted and due to the piston and slidable plate being cooled, the squared off ends of the bacon piece are frozen to a limited extent and thus retain their compressed shape. The slidable plate is then retracted to allow the piston to once more be moved through the press box to force the compressed bacon piece out of the press box into the duct; the piston being extendible out from the press box with the pneumatic ram at full length.

Whilst the squared off ends are frozen to a limited extent to enable them to retain their compressed shape, the whole bacon piece will sag from its compressed form if the ambient air temperature is too high and can contact the bacon piece before it is at least surface frozen in the nitrogen tunnel. Preferably the bacon pieces should be at around 30°F when initially located in the press. In the event of warmer conditions prevailing making it difficult for the bacon pieces to maintain this temperature, the press box itself may be cooled in addition to the piston and end plate.

As the compressed bacon piece is pushed from the press box into the duct, the bottom conveyor grips the bacon piece by virtue of the spikes and the bacon piece is drawn along the duct into the nitrogen tunnel. A following bacon piece is pushed by the pneumatic ram and cooled piston, into contact with the rear end of the bacon piece in front so that the squared off ends of adjacent bacon pieces abut each other. These frozen squared off ends freeze together in the nitrogen tunnel producing a continuous ribbon of bacon pieces. As the ribbon is built up so the piston and pneumatic ram move at the speed of the bottom conveyor of the duct until the last compressed bacon piece is clear of the press box.

-6-

The bacon pieces are gradually chilled or frozen to a certain extent, until they reach the exit end of the nitrogen tunnel. Preferably the duct continues beyond the end of the nitrogen tunnel and is thermally insulated to allow the surface temperature of the bacon ribbon to stabilize, the temperature reducing slightly. The end of the duct leads immediately to a slicing and packaging station, preferably of the fully automated type.

By varying the speed of the bacon ribbon i.e. the bottom conveyor, the thickness of slice can be varied, though this can of course be alternatively controlled at the slicer.

By using the preferred embodiment of the present invention described hereabove, the required handling of the chilled or minimally frozen bacon can be reduced, and the degree of freezing can therefore be reduced so that the final bacon quality is improved as compared with the product of prior art arrangements.

Further, when using the preferred embodiment of the present invention described hereabove to produce a continuous ribbon of bacon, the bacon is continuously sliced at the slicing and packaging station resulting in no wastage or a minimum of wastage. This is in contrast to prior art arrangements wherein individual frozen bacon pieces are sliced resulting in waste from either end of the bacon pieces, these end faces not being squared off.

In an alternative embodiment of the present invention, the refrigeration means are replaced by heating means e.g. steam, radiant heat etc., so that, for example, compressed hams can be cooked as they are pressed along the duct. The resultant cooked hams are the required cross-section and can be sliced as required.

-7-

The present invention will now be further described, by way of example, with reference to the accompanying drawings, in which:-

Fig.1 is a perspective view of the input end of a preferred embodiment of the present invention;

Fig.2 is a sectional view of part of a modified form of duct for use in the apparatus of Fig.1; and

Fig.3 is a perspective, partially schematic and partially cutaway, view of the output end of the apparatus of Fig.1.·

In the preferred embodiment of the apparatus of the present invention shown in the accompanying drawings, an elongate duct 1 is generally horizontally arranged and extends through a conventional nitrogen tunnel, generally designated 3. A press 5 is located adjacent one end of the duct 1, and a slicing and pushing station 6, schematically illustrated in the accompanying drawings, is located at the other end of the duct 1.

The nitrogen tunnel 3· has a wire mesh endless conveyor 7· for carrying meat e.g. bacon pieces, through the tunnel 3, the wire mesh endless conveyor 7 having upstanding spikes 9 at spaced apart locations for gripping the bacon pieces. ·This endless conveyor 7 forms the bottom wall of the duct 1, the other three ·walls of the duct 1 which has a generally rectangular internal cross-section, being in the form of an inverted U-shaped bridge consisting of three roller conveyors 11, 13 and 15. Thus the cooling nitrogen within the tunnel 3 can pass between the rollers of the roller conveyors 11, 13 and 15 of adjacent bridges, to chill or freeze to a limited extent, the meat passing through the duct 1.

Whilst in the illustrated construction, the rollers are equi-spaced apart along the length of the duct 1

-8-

and are necessarily close together at the end of the duct 1 adjacent to the press 5, so as to maintain the bacon pieces in the compressed form produced by press 5, the rollers may be spaced further apart towards the outlet end of the nitrogen tunnel 3 as the bacon pieces are then frozen in the compressed configuration.

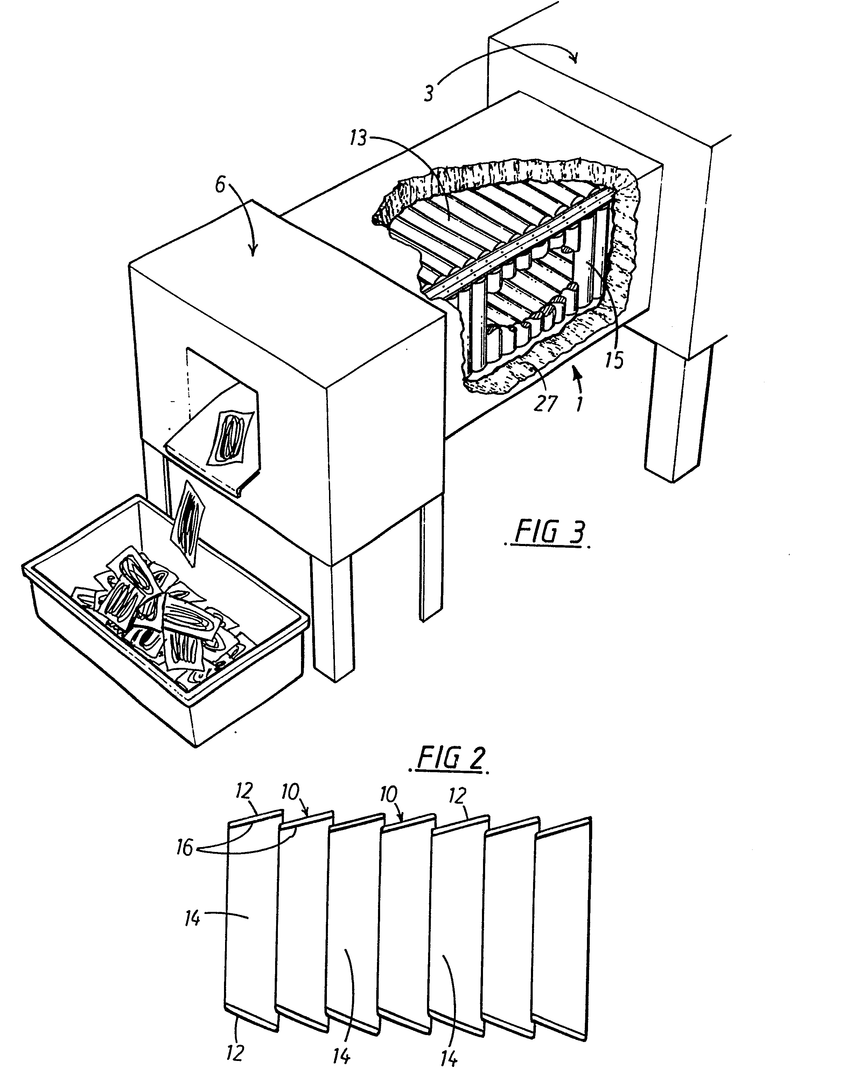

In a modified construction, the duct 1 is formed by juxtaposed inverted U-shaped bridges 10 (see Fig.2) which are each formed by two upstanding members 12 and a horizontal member 14, these members each presenting a planar surface 16 to the inside of the duct. These planar surfaces 16 are each angled relative to the longitudinal axis of the duct and are convergent with respect to the path of travel along the duct away from the press 5. Thus each bridge 10 provides a relatively wide inlet end for, for example, a bacon piece, and gradually narrows to an outlet end which is of approximately the same dimensions as the compressed bacon piece. By using such a bridge 10, the requirement for moving parts is avoided. Further, if the said members 12, 14 are of a constant thickness so that the outer surfaces thereof are planar and convergent, adjacent bridges can be telescoped together to a limited extent, whilst still allowing cooling nitrogen gas to pass therebetween into the duct.

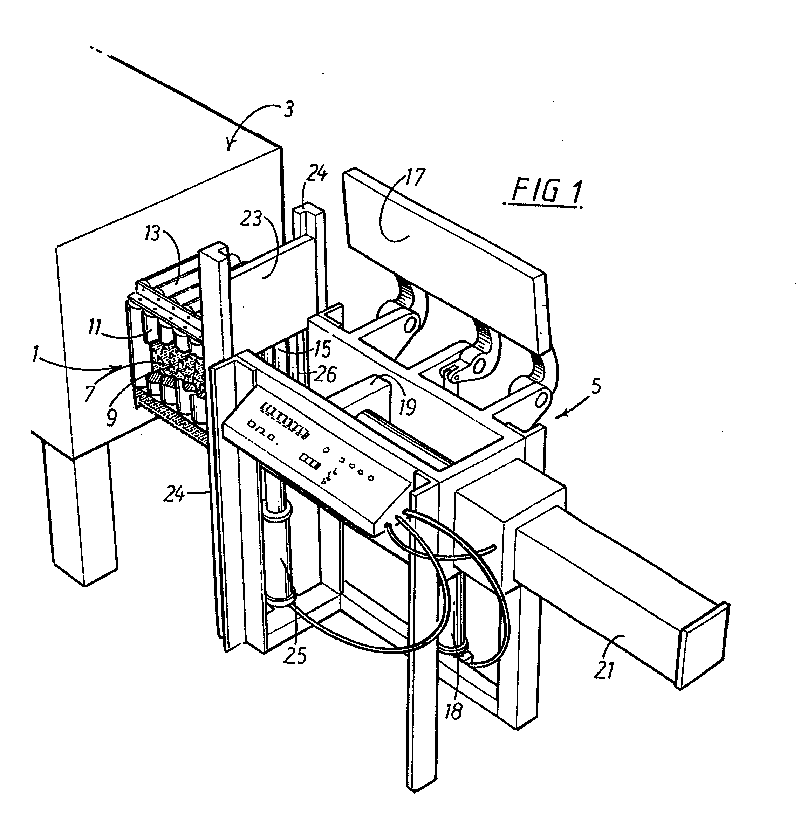

The press 5 is in the form of an elongate rectangular box with a lid or upper side wall 17 which is pivotable upwards and to the side to open the press under the action of a pneumatic ram 18. One end wall of the box is formed by a piston 19 of a further pneumatic ram 21. The other end of the box can be opened or closed by a plate 23 which can be slid in its own plane, in vertical guides 24, transversely of the longitudinal axis of the box, to open the press 5 to duct 1. This plate 23 is rectangular and its upper half (as viewed in Fig.1) is solid, whilst its lower half has a rectangular aperture 26 which is larger than the internal transverse cross-section of the box forming press 5. Thus by operating a pneumatic ram 25, plate 23 can be slid either upwards in guides 24, to position aperture 26 over the end of the box and open the press 5 to the duct 1, or downwards to position the solid half of plate 23 over the end of the box, to close the press 5.

For reasons which will be appreciated later, both the piston 19 and at least the solid half of plate 23, are cooled. This cooling is preferably provided by passing liquid nitrogen through internal passages (not shown) in the piston 19 and plate 23.

Whilst pneumatic rams 18, 21 and 25 are used to control the press 5, these rams can alternatively be hydraulically or electro-mechanically operable.

The duct 1 extends beyond the outlet end (Fig.3) of the nitrogen tunnel 3 and is thermally insulated as at 27 to allow for a stabilisation of the cooling effect of the tunnel 3 on the meat passing therethrough. The duct 1 leads immediately to a slicing and packaging station 6 which preferably continuously slices, weighs and packs the meat product. The details of this slicing and packaging station are not discussed as there are many proprietary slicing machines and packaging machines which could be coupled to the outlet end of duct 1.

When the above described apparatus is used to treat bacon pieces to make them ready for slicing, weighing and packaging, preferably in an automated manner, the bacon pieces preferably at an initial temperature of around 30°F, are indivdually located in the press 5.

With a bacon piece located in the press 5, the lid 17 is closed by actuating ram 18. This then compresses the bacon piece to the desired transverse cross-section. With plate 23 in the closed position, pneumatic ram 21 is actuated to move piston 19 along the press 5, to thus compress the bacon piece axially. Both piston 19 and plate 23 are cooled so that the end faces of the bacon piece are chilled or frozen to a limited extent, and thus retain their compressed form. The piston 19 is then retracted, and ram 25 is activated to move plate 23 to the open position. Piston 19 is then moved forwards once more to push the compressed bacon piece out of the press 5 into the duct 1. The conveyor 7 with the aid of spikes 9, then draws the bacon piece slowly along the duct 1, through the nitrogen tunnel 3. When pushing the bacon piece out of the press 5, the piston 19 extends out beyond the open end of the press 5. When fully extended, the piston is then retracted into the press, the ram 25 is activated to move plate 23 to the closed position and the lid 17 is opened by actuation of ram 18, to thus make the press 5 ready to receive a further bacon piece. The operation of rams 18, 21 and 25 can be effected manually or the sequence of operations can be controlled electronically in a programmed manner.

When the immediately following bacon piece has been compressed in the press 5, the plate 23 is moved to the open position and piston 19 pushes the bacon piece out of the press 5 and into the duct 1. The speed of ram 21 is such that this second bacon piece catches up and abuts against the first mentioned bacon piece. The squared off ends of the two bacon pieces abut squarely together and are frozen together. The same happens with subsequent compressed bacon pieces so that a continuous ribbon of bacon is moving through the duct 1. Eventually the bacon pieces are pushed from the press 5 and catch up and abut against the preceding bacon piece before the piston 19 is fully

-11-

extended. In this case the piston 19 moves at the speed of the conveyor, pressing the bacon pieces together and thus aiding the joining together of the bacon pieces until the fully extended piston position is reached.

The duct 1 extends out beyond the outlet end of the nitrogen tunnel 3, the extended portion of the duct 1 being thermally insulated as at 27, and leading to a slicing and packing station 6 which is shown schematically in the accompanying drawings and which is preferably fully automated. The thermally insulated portion of the duct 1 allows the temperature of the bacon to equalise to a certain extent through the whole bacon piece, the outer surface temperature reducing slightly to facilitate better slicing

Thus, by virtue of the present invention, a continuous ribbon of bacon can be fed to a slicing and packing station with a minimum of freezing and handling; the bacon ribbon only being frozen sufficiently to retain its compressed shape so that optimum quality is maintained. The slicing and packing station 6 is not described further as there are a number of available proprietary machines which could be suitable with only minor modifications being required.

Further by the production of a continuous ribbon of bacon as described hereabove, the slicing and packaging station 5 operates continuously and with no wastage or a minimum of wastage, all of the bacon being usefully sliced. This is in contrast to prior art arrangements wherein individual bacon pieces are sliced and the uneven end faces produce waste.

Further the above described apparatus as illustrated in the accompanying drawings can be modified by substituting an oven for the nitrogen tunnel. In this way sliced cooked meats can be prepared and continuously packed.

. . . . . . . . . . . . . . . . . . . . . . . . . . . . . . . . . . . . . . . . . . . . . . . . . . . . . .

- 12 -

## CLAIMS

1. A method of treating meat characterised by the steps of introducing boned-out pieces of meat into a press (5) located at one end of an elongate duct (1), activating the press (5) to deform the meat and moving the meat along the duct (1), the duct (1)˙ being maintained at a required temperature.

2. A method according to claim 1, in which the duct (1) is heated.

3. A method according to claim 1, in which the duct (1) is refrigerated.

4. A method according to claim 3, in which the compressed pieces of meat are moved in juxtaposition to each other through the duct (1).

5. A method according to claim 4, in which the ends of the pieces of meat are cooled in the press (5) and are bonded together in the duct (1) to form a continuous ribbon of meat.

6. A method according to any one of claims 3 to 5, in which the meat pieces are passed from the refrigerated duct (1) through an extended portion of the duct (1), which extended portion is thermally insulated (27).

7. A method according to any one of the preceding claims, in which the meat pieces are fed from the duct (1) into a slicing station (6).

8. Apparatus for treating meat, the apparatus being characterised by an elongate duct (1) to one end of which a press (5) is attached, the press (5) being adapted to compress a piece of meat to a cross-section substantially similar to the internal transverse cross-section of the duct (1), and means (3) being provided for adjusting the temperature within the duct to a desired level.

9. Apparatus according to claim 8, in which heating means are provided for heating the duct (1) and its contents.

10. Apparatus according to claim 8, in which refrigeration means (3) are provided for cooling the duct (1) and its contents.

11. Apparatus according to claim 10, in which the refrigeration means (3) are in the form of a nitrogen tunnel (3) through which the duct (1) extends.

12. Apparatus according to claim 11, in which the duct (1) is formed by an endless conveyor (7) which moves through the nitrogen tunnel (3) and an inverted U-shaped assembly comprising three roller conveyors (11, 13, 15).

13. Apparatus according to claim 12, in which the duct (1) is formed by an endless conveyor (7) which moves through the nitrogen tunnel (3) and a number of juxtaposed, inverted U-shaped bridge members (10), each presenting a converging path to meat passing therethrough.

14. Apparatus according to any one of claims 8 to 13, in which the press (5) is an elongate cavity through which a piston (19) powered by a ram (21) can move, an end wall (23) of the cavity opposite said piston (19) being operable by a further ram (25), and the upper side (17) of the press, defining the cavity being removable by a still further ram (18).

15. Apparatus according to claim 14, in which the piston (19) and said end wall (23) are cooled.

16. Apparatus according to any one of claims 11 to 13, in which the duct (1) extends beyond the nitrogen tunnel (3), the extended portion of the duct (1) being thermally insulated (27).

17. Apparatus according to any one of claims 8 to 16, in which the duct (1) leads to a slicing machine (6).

. . . . . . . . . . . . . . . . . . . . . . . . . . . . . . . . . . . . . . . . . . . . . . . . . . . . . . . . . . .

FIG 1

0101264

_FIG 3_

_FIG 2_